# EUROPÄISCHE PATENTSCHRIFT

(11) **EP 1 417 723 B1**
(45) Veröffentlichungstag und Bekanntmachung des Hinweises auf die Patenterteilung: **28.02.2007**
(21) Anmeldenummer: 02794738.1
(22) Anmeldetag: 31.07.2002
(51) Int. Cl.: H01M 4/66, H01M 8/02, C23C 10/04, C23C 30/00

(54) **KOLLEKTORPLATTENSATZ FÜR BRENNSTOFF- ODER ANDERE ELEKTROCHEMISCHE ZELLEN SOWIE VERFAHREN ZUR HERSTELLUNG SOLCHER KOLLEKTORPLATTEN**
SET OF COLLECTOR PLATES FOR FUEL CELLS OR OTHER ELECTROCHEMICAL CELLS AND METHOD FOR PRODUCING SUCH COLLECTOR PLATES
GROUPE DE PLAQUES COLLECTRICES POUR PILES A COMBUSTIBLE OU AUTRES PILES ELECTROCHIMIQUES, ET PROCEDE DE PRODUCTION DESDITES PLAQUES

(30) Priorität: 14.08.2001 DE 10139799
(43) Veröffentlichungstag der Anmeldung: 12.05.2004
(73) Patentinhaber: Deutsche Titan GmbH, 45143 Essen (DE)
(72) Erfinder: SIBUM, Heinz, 45257 Essen (DE)
(74) Vertreter: Knauf, Rudolf
(86) Internationale Anmeldenummer: PCT/EP2002/008511
(87) Internationale Veröffentlichungsnummer: WO 2003/017400

(56) Entgegenhaltungen:
- EP-A- 0 620 609
- DE-C- 19 545 110
- PATENT ABSTRACTS OF JAPAN vol. 007, no. 268 (C-197), 30. November 1983 (1983-11-30) & JP 58 147595 A (MISHIMA KOUSAN KK), 2. September 1983 (1983-09-02)
- PATENT ABSTRACTS OF JAPAN vol. 1995, no. 03, 28. April 1995 (1995-04-28) & JP 06 333569 A (FUJI PHOTO FILM CO LTD), 2. Dezember 1994 (1994-12-02)

## Beschreibung

Die Erfindung betrifft einen Kollektorplattensatz für Brennstoff- oder andere elektrochemische Zellen, dessen aus einem Titanwerkstoff bestehende Platten über Stromabnehmer elektrisch parallel miteinander verbunden sind.

Solche Kollektorplattensätze sind bekannt (DE 37 43 0 89 A1). Als Material für die Kollektorplatten werden Blei, Kupfer aber auch Titan verwendet. Obwohl Titan nur zum Teil die an solche Werkstoffe gestellten Forderungen, nämlich hohe chemische Beständigkeit in den verwendeten Elektrolyten und eine passable elektrische Leitfähigkeit, besitzt, zeichnet sich Titan gegenüber anderen geeigneten Werkstoffen durch seine niedrige Dichte aus. Seine chemische Beständigkeit basiert darauf, dass sich an seiner Oberfläche bei Kontakt mit Sauerstoff eine "keramische" Oberfläche ausbildet, die allerdings nachteilig für eine elektrische Kontaktierung der Platten ist.

Der Erfindung liegt die Aufgabe zugrunde, einen Kollektorplattensatz für Brennstoff- oder andere elektrochemische Zellen zu schaffen, der sich durch ein geringes Gewicht, eine gute chemische Beständigkeit und durch einen geringen elektrischen Übergangswiderstand der zu kontaktierenden Kollektorplatten auszeichnet.
Ferner liegt der Erfindung die Aufgabe zugrunde, eine Brennstoffzelle zur Verfügung zu stellen, die ein geringes spezifisches Gewicht aufweist, einen guten Wirkungsgrad besitzt und für die Verwendung von korrosiven/aggressiven Elektrolyten geeignet ist.

Die erste Aufgabe wird mit einem Kollektorplattensatz der eingangs genannten Art dadurch gelöst, dass die Stromabnehmer der Platten an ihren Kontaktflächen eine Kupfer/Titanlegierung aufweisen, die homogener Bestandteil des Titanwerkstoffes der Platten ist.

In Bezug auf die Brennstoffzelle wird die Aufgabe dadurch gelöst, dass die Brennstoffzelle mit Kollektorplatten gemäß einem der Ansprüche 1 oder 2 ausgestattet ist.

Dadurch, dass ein erfindungsgemäßer Kollektorplattensatz verwendet wird, verringert sich das Gesamtgewicht der Brennstoffzellen bezogen auf ihr Volumen oder ihre Leistung im Vergleich zu Kollektorplattensätzen aus bekannten Materialkombinationen. Gleichzeitig ist auch der elektrische Übergangswiderstand zwischen den Kontaktflächen der Stromabnehmer gering, so dass die Leistungsverluste gering und der Wirkungsgrad der Brennstoffzelle hoch sind. Außerdem können auch stark korrosive/agressive Elektrolyten eingesetzt werden, weil von den Kollektorplatten nur der eine sehr gute chemische Beständigkeit aufweisende Titanteil mit dem Elektrolyten in Kontakt tritt.

Beim erfindungsgemäßen Kollektorplattensatz werden die beiden ersten Forderungen durch den Titanwerkstoff erfüllt. Unter "Titanwerkstoff" werden nicht nur Reintitan, sondern auch Legierungen mit Titan als Basis verstanden. Die dritte Forderung wird mit der Kupfer/Titanglegierung an der Kontaktfläche erfüllt. Der Kupferanteil dieser Legierung nimmt von der Kontaktfläche in Richtung des Kerns der Platten allmählich ab. Da die Stromabnehmer nicht dem aggressiven Medium des Elektrolyten ausgesetzt sind, nehmen die Kontaktflächen trotz des Kupfers bzw. Kupferanteils an der Oberfläche keinen Schaden. Der Kontakt mit Sauerstoff führt anders als bei Titanlegierungen auch nicht zur Bildung einer mehr oder weniger elektrisch isolierenden Oberfläche.

Gegenstand der Erfindung ist ferner ein Verfahren zum Herstellen von Platten für einen Kollektorplattensatz, das durch folgende Schritte gekennzeichnet ist:
a) Auf ein Trägerblech aus Titan wird beidseitig eine Folie aus Kupfer aufplattiert.
b) Das plattierte Trägerblech wird in den Bereichen des Stromabnehmers mit einem gegenüber ätzenden Medien resistenten Überzug maskiert.
c) Vom Trägerblech wird durch Behandlung mit ätzenden Medien die Kupferfolie bis auf die maskierten Stromabnehmer entfernt.
d) Durch Wärmebehandlung des Trägerbleches wird das Kupfer der Folie auf den Stromabnehmer zu Kupfer/Titan legiert.

Vorzugsweise erfolgt das Plattieren des Trägerbleches mit Kupferfolie am Band, das anschließend in plattenförmige Zuschnitte aufgeteilt wird. Grundsätzlich ist es aber auch möglich, die einzelnen Verfahrensschritte im Durchlauf am Band durchzuführen und erst danach die Aufteilung in plattenförmige Zuschnitte vorzunehmen.

Im folgenden wird die Erfindung anhand einer Zeichnung näher erläutert. Im einzelnen zeigen:
- Figur 1: mehrere Platten eines Kollektorplattensatzes im Querschnitt
**und**
- Figur 2: ein Fließbild für das Herstellungsverfahren der Kollektorplatten.

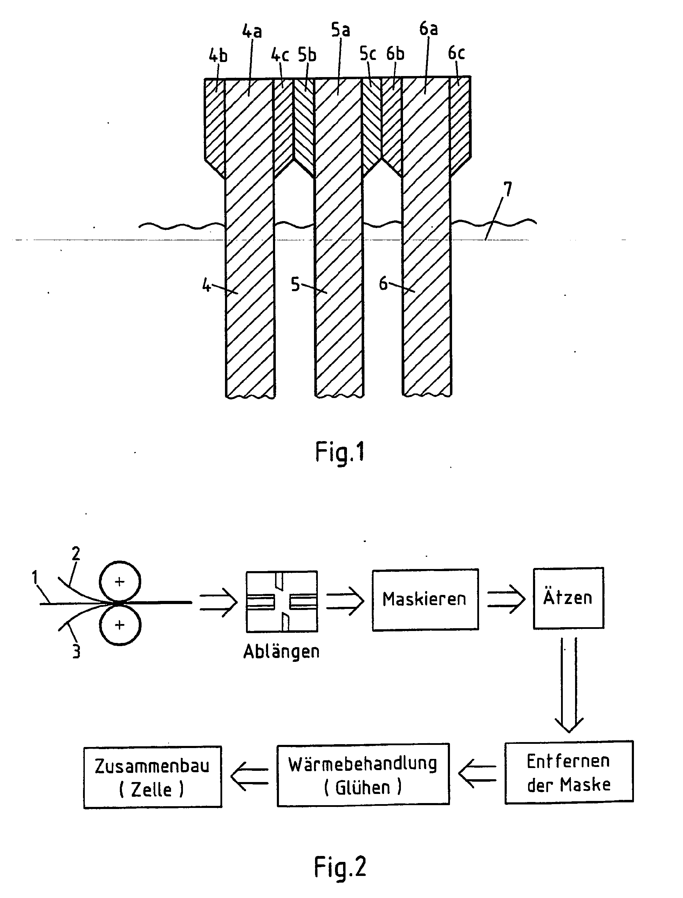

Wie Figur 2 zeigt, wird in einem ersten Schritt auf ein Titanband 1 beidseitig eine Kupferfolie 2, 3 aufplattiert. In einem zweiten Verfahrensschritt wird das plattierte Band in einzelne Zuschnitte für die Kollektorplatten aufgeteilt. Im folgenden Verfahrensschritt erfolgt die Maskierung der Zuschnitte. Dabei werden die Kollektorplatten bis auf ihre Stromabnehmer mit einem gegenüber einem ätzenden Medium resistenten Lack maskiert. Danach werden in einem vierten Verfahrensschritt die Kollektorplatten geätzt. Dabei wird die Kupferfolie 2, 3 bis auf die maskierten Bereiche der Stromabnehmer weggeätzt. Anschließend wird in einem fünften Verfahrensschritt der Abdecklack von den mit Kupferfolie plattierten Stromabnehmern entfernt. Schließlich erfolgt in einem sechsten Verfahrensschritt die Wärmebehandlung (Glühung) der Kollektorplatten. Dabei bildet sich eine Legierung zwischen dem Titanwerkstoff der Kollektorplatten und dem Kupfer der Folie aus. Der Kupferanteil der Kupfer/Titanlegierung an den Stromabnehmern nimmt von der Kontaktfläche zum Kern der Kollektorplatten allmählich ab. Im Grenzfall kann an der Kontaktfläche sogar reines Kupfer sein.

Aus den in der erläuterten Weise hergestellten, erfindungsgemäßen Kollektorplatten können dann Kollektorplattensätze für den Einbau in elektrochemischen Zellen, insbesondere Brennstoffzellen, zusammengestellt werden.

In Figur 1 sind drei Kollektorplatten 4, 5, 6 eines Kollektorplattensatzes zusammengestellt und elektrisch parallel geschaltet. Bis auf ihre mit der Kupfer/Titanlegierung abgedeckten Stromabnehmer 4a, 5a, 6a tauchen sie in einen Elektrolyten 7 ein. Die Stromabnehmer 4a, 5a, 6a liegen mit ihren Kontaktflächen 4b, 4c, 5b, 5c, 6b, 6c aus der Titan/Kupferlegierung flächig fest aufeinander, insbesondere sind sie aufeinander gepresst. Denkbar ist auch, dass sie stoffschlüssig, z.B. durch Löten, miteinander verbunden sind.

## Patentansprüche

1. Kollektorplattensatz für Brennstoff- oder andere elektrochemische Zellen, dessen aus einem Titanwerkstoff bestehende Platten (4, 5, 6) über Stromabnehmer (4a, 5a, 5b) elektrisch parallel miteinander verbunden sind, **dadurch gekennzeichnet, dass** die Stromabnehmer (4a, 5a,6a) an ihren Kontaktflächen eine Kupfer/Titanlegierung (4b, 4c, 5b, 5c, 6b, 6c) aufweisen, die homogener Bestandteil des Titanwerkstoffes der Kollektorplatten (4c, 5c) ist.

2. Kollektorplattensatz nach Anspruch 1, **dadurch gekennzeichnet, dass** der Kupferanteil der Kupfer/Titanlegierung von der Kontaktfläche der Stromabnehmer (4a, 5a, 6a) in Richtung des Kerns der Kollektorplatten (4, 5,6) allmählich abnimmt.

3. Elektrochemische Zelle, insbesondere Brennstoffzelle, ausgestattet mit einem Kollektorplattensatz nach Anspruch 1 oder 2.

4. Verfahren zum Herstellen von Platten (4, 5, 6) für einen Kollektorplattensatz nach Anspruch 1 oder 2, **gekennzeichnet, durch** folgende Schritte:
a) Auf ein Trägerblech (1) aus Titan wird beidseitig eine Folie (2,3) aus Kupfer aufplattiert.
b) Das plattierte Trägerblech (1) wird in den Bereichen des bzw. der Stromabnehmer (4a, 5a, 6a) mit einem gegenüber ätzenden Medien resistenten Überzug maskiert.
c) Vom Trägerblech (1) wird **durch** Behandlung mit einem ätzenden Medium die Kupferfolie (2, 3) bis auf die maskierten Stromabnehmer (4a, 5a, 6a) entfernt.
d) **Durch** Wärmebehandlung des Trägerbleches (1) wird das Kupfer der Folie auf dem bzw. den Stromabnehmern (4a, 5a, 6a) zu Kupfer/Titan legiert.

## Claims

1. Collector plate set for fuel cells or other electrochemical cells, the plates (4, 5, 6) of which, consisting of a titanium material, are electrically connected in parallel to one another by means of current collectors (4a, 5a, 5b), **characterised in that** the current collectors (4a, 5a, 6a) have on their contact surfaces a copper/titanium alloy (4b, 4c, 5b, 5c, 6b, 6c), which is a homogenous constituent part of the titanium material of the collector plates (4c, 5c).

2. Collector plate set according to Claim 1, **characterised in that** the copper portion of the copper/titanium alloy of the contact surface of the current collectors (4a, 5a, 6a) gradually decreases in the direction of the core of the collector plates (4, 5, 6).

3. Electrochemical cell, in particular a fuel cell, equipped with a collector plate set according to Claim 1 or 2.

4. Method for the manufacture of plates (4, 5, 6) for a collector plate set according to Claim 1 or 2, **characterised by** the following steps:
a) A film (2, 3) made of copper is plate-coated onto both sides of a carrier plate (1) made of titanium.
b) The plate-coated carrier plate (1) is masked in the areas of the current collector(s) (4a, 5a, 6a) with a coating resistant to etching media.
c) By treatment with an etching medium, the copper film (2, 3) is removed from the carrier plate (1) as far as the masked current collectors (4a, 5a, 6a).
d) By heat treatment of the carrier plate (1), the copper of the film is alloyed on the current collector(s) (4a, 5a, 6a) to form copper/titanium.

## Revendications

1. Groupe de plaques collectrices pour piles à combustible ou autres piles électrochimiques, qui sont reliées l'une à l'autre de manière électrique parallèle par un collecteur de courant (4a, 5a, 5b) sur des plaques consistant en un matériau en titane (4, 5, 6), **caractérisé en ce que** les collecteurs de courant (4a, 5a, 6a) présentent sur leur surface de contact, un alliage cuivre/titane (4b, 4c, 5b, 5c, 6b, 6c), qui est le constituant homogène du matériau en titane des plaques collectrices (4c, 5c).

2. Groupe de plaques collectrices selon la revendication 1, **caractérisé en ce que** la quantité en cuivre de l'alliage cuivre/titane des surfaces de contact du collecteur de courant (4a, 5a, 6a) diminue progressivement en direction du coeur des plaques collectrices (4, 5, 6).

3. Cellules électrochimiques, en particulier cellules à combustible, équipées d'un groupe de plaques collectrices selon la revendication 1 ou 2.

4. Procédé de préparation de plaques (4, 5, 6) pour un groupe de plaques collectrices selon la revendication 1 ou 2, **caractérisé par** les étapes suivantes :
a) sur une tôle support (1) en titane, on dépose par placage, sur les deux faces, une feuille (2, 3) en cuivre ;
b) la tôle support plaquée (1) est masquée au niveau du ou des collecteurs de courant (4a, 5a, 6a) avec un revêtement résistant à un milieu corrosif ;
c) on élimine la feuille de cuivre (2, 3) de la tôle support (1) par traitement avec un milieu corrosif jusqu'au collecteur de courant masqué (4a, 5a, 6a) ;
d) par traitement thermique de la tôle support (1), le cuivre de la feuille est allié sur le ou les collecteurs de courant (4a, 5a, 6a) en cuivre/titane.
